Europäisches Patentamt

European Patent Office

Office européen des brevets

(19)

(11) **EP 0 902 272 A2**

(12) **EUROPÄISCHE PATENTANMELDUNG**

(43) Veröffentlichungstag:
17.03.1999 Patentblatt 1999/11

(51) Int. Cl.⁶: **G01N 21/31**

(21) Anmeldenummer: 98116856.0

(22) Anmeldetag: 07.09.1998

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: 12.09.1997 DE 19740210

(71) Anmelder:
**BODENSEEWERK PERKıN-ELMER GMBH
D-88662 Überlingen (DE)**

(72) Erfinder:
• **Radziuk, Bernhard, Dr.**
 88699 Frickingen (DE)
• **Rödel, Günter**
 88696 Owingen (DE)

(74) Vertreter:
**Grünecker, Kinkeldey,
Stockmair & Schwanhäusser
Anwaltssozietät
Maximilianstrasse 58
80538 München (DE)**

(54) **Atomabsorptionsspektrometer**

(57) Die Erfindung betrifft ein Atomabsorptionsspektrometer, umfassend einen Meßlichtweg, der von
wenigstens einer jeweils Linienstrahlung eines nachzuweisenden Elements emittierenden Lichtquelle durch
eine eine zu untersuchende, das nachzuweisende Element enthaltende Probe in den atomisierten Zustand
versetzende Atomisierungseinrichtung zu einer Detektionseinrichtung führt, und einen Referenzlichtweg, der
von jeder Lichtquelle zu der Detektionseinrichtung führt.
Sie ist dadurch gekennzeichnet, daß eine Strahlenteilereinrichtung so vorgesehen ist, daß ein erster Teil der
Linienstrahlung jeder Lichtquelle über den Meßlichtweg
und gleichzeitig ein zweiter Teil der Linienstrahlung
jeder Lichtquelle über den Referenzlichtweg führbar ist.

Fig. 1

**Beschreibung**

Die Erfindung betrifft ein Atomabsorptionsspektrometer, umfassend einen Meßlichtweg, der von wenigstens einer jeweils Linienstrahlung wenigstens eines nachzuweisenden Elements emittierenden Lichtquelle durch eine eine zu untersuchende, das nachzuweisende Element enthaltende Probe in den atomisierten Zustand versetzende Atomisierungseinrichtung zu einer Detektionseinrichtung führt, und einen Referenzlichtweg, der von jeder Lichtquelle zu der Detektionseinrichtung führt.

Weiterhin betrifft die Erfindung ein Verfahren zur Durchführung einer DoppelstrahlAtomabsorption, mit den Schritten: Koppeln von Strahlung aus wenigstens einer jeweils Linienstrahlung wenigstens eines nachzuweisenden Elements emittierenden Lichtquelle in einen Meßlichtweg, der von jeder Lichtquelle durch eine eine zu untersuchende, das nachzuweisende Element enthaltende Probe in den atomisierten Zustand versetzende Atomisierungseinrichtung zu einer Detektionseinrichtung führt, Koppeln von Strahlung aus jeder Lichtquelle in einen Referenzlichtweg, der von jeder Lichtquelle zu der Detektionseinrichtung führt, Messen der Intensität der Strahlung, die den Meßlichtweg durchlaufen hat, Messen der Intensität der Strahlung, die den Referenzlichtweg durchlaufen hat, Ermitteln der durch die atomisierte Probe absorbierten Strahlung aus der Intensität der Strahlung, die den Meßlichtweg durchlaufen hat, und der Strahlung, die den Referenzlichtweg durchlaufen hat.

Ein derartiges Atomabsorptionsspektrometer und ein derartiges Verfahren sind aus dem Stand der Technik bekannt.

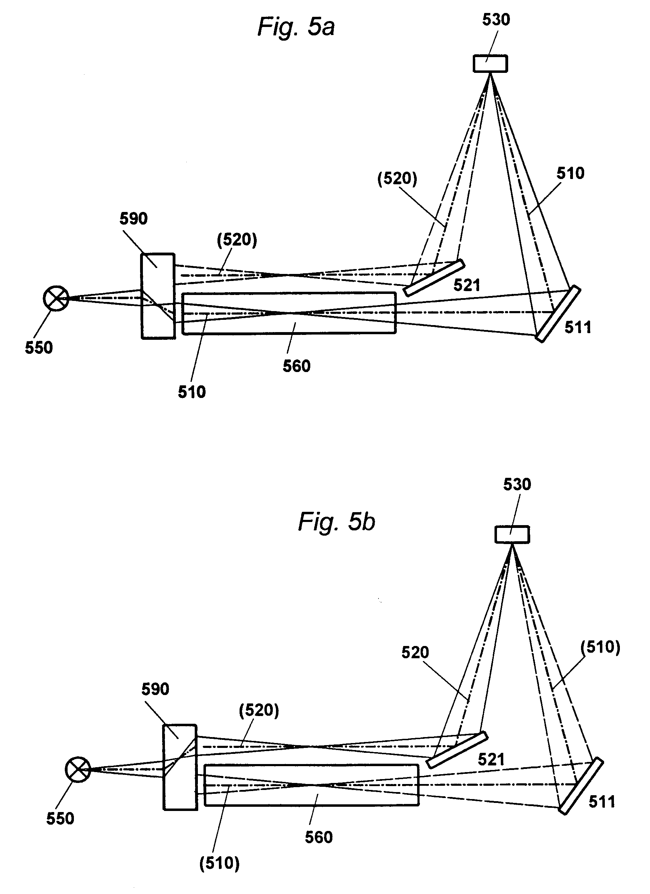

In Fig. 5 ist ein Atomabsorptionsspektrometer 500 gemäß dem Stand der Technik schematisch dargestellt. Das Atomabsorptionsspektrometer 500 umfaßt einen Meßlichtweg 510 und einen Referenzlichtweg 520. Weiterhin weist das Atomabsorptionsspektrometer 500 eine Lichtquelle 550 auf, die eine Linienstrahlung eines nachzuweisenden Elements, das in einer zu untersuchenden Probe enthalten ist, emittiert.

Durch eine Choppereinrichtung 590 wird das von der Lichtquelle 550 emittierte Licht, entsprechend der Stellung der in der Choppereinrichtung vorgesehenen Elemente (nicht gezeigt), entweder in den Meßlichtweg 510 oder in den Referenzlichtweg 520 eingekoppelt.

In Fig. 5a ist der Lichtweg für eine erste Stellung der Elemente der Choppereinrichtung 590 dargestellt. In dieser Stellung wird das von der Lichtquelle emittierte Licht in den Meßlichtweg 510 eingekoppelt. Dementsprechend ist der Referenzlichtweg 520 in Fig. 5a lediglich gestrichelt dargestellt.

Das von der Lichtquelle emittierte Licht läuft auf dem Meßlichtweg 510 durch eine Atomisierungseinrichtung 560, in der die zu untersuchende Probe in den atomisierten Zustand versetzt ist. In Fig. 5 ist die Atomisierungseinrichtung 560 lediglich schematisch dargestellt. Als Atomisierungseinrichtungen lassen sich, in Abhängigkeit von der Probenmatrix und dem in der Probe enthaltenem, nachzuweisenden Element, alle in der Atomabsorptionsspektroskopie verwendeten Atomisierungseinrichtungen, wie beispielsweise Atomisierungsofen, Flamme, Kaltdampfzelle und dgl. einsetzen.

Nach Durchlauf durch die Atomisierungseinrichtung 560 wird die Strahlung auf einem Detektor 530 aufgefangen, durch den die Intensität dieser Strahlung gemessen wird.

In Fig. 5b ist der Lichtweg für eine zweite Stellung der Elemente der Choppereinrichtung 590 dargestellt. In dieser Stellung wird das von der Lichtquelle emittierte Licht in den Referenzlichtweg 520 eingekoppelt. Analog zu Fig. 5a ist der Meßlichtweg 510 in Fig. 5b lediglich gestrichelt dargestellt.

Auf dem Referenzlichtweg 510 wird die von der Lichtquelle emittierte Linienstrahlung direkt auf den Detektor 530 geführt, durch den die Intensität dieser Strahlung gemessen wird.

Neben den bereits beschriebenen Komponenten umfaßt das Atomabsorptionsspektrometer 500 optische Elemente 511 und 521, wie beispielsweise Spiegel oder Linsen. Diese optischen Elemente sind je nach Bedarf zur Fokussierung bzw. Umlenkung der Lichtwege vorgesehen.

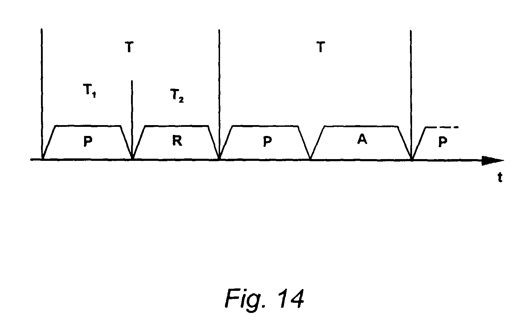

Im folgenden wird ein Verfahren zur Durchführung einer Doppelstrahl-Atomabsorption mit dem in Fig. 5 gezeigtem Atomabsorptionsspektrometer beschrieben. Hierzu wird auf Fig. 14, in der ein Zeitablauf des Verfahrens dargestellt ist, Bezug genommen.

Nachdem die Atomisierungseinrichtung 560 die Probe in ihren atomisierten Zustand versetzt hat, wird in einer ersten Phase P eines Meßzyklus T durch entsprechende Stellung der Elemente der Choppereinrichtung (siehe Fig. 5a) für eine vorgegebene Zeitdauer $T_P$ die Linienstrahlung der Lichtquelle in einen in den Meßlichtweg 510 eingekoppelt und die Intensität der Strahlung, die den Meßlichtweg 510 durchlaufen hat, in dem Detektor 530 gemessen.

Nach Abschluß dieser Messung wird schließlich in einer zweiten Phase R die von der Lichtquelle emittierte Strahlung durch entsprechende Stellung der Choppereinrichtung (siehe Fig. 5b) für eine vorgegebene Zeitdauer $T_R$ in den Referenzlichtweg eingekoppelt. Die Intensität der Strahlung, die den Referenzlichtweg durchlaufen hat, wird wiederum mit dem Detektor 530 gemessen.

Schließlich wird die durch die atomisierte Probe absorbierte Strahlung aus der Intensität der Strahlung, die den Meßlichtweg durchlaufen hat, und der Strahlung, die den Referenzlichtweg durchlaufen hat, ermittelt.

Der in Fig. 14 gezeigte Meßzyklus T wird in der Regel zur Verbesserung der Statistik, insbesondere wenn die Atomabsorption über einen Zeitraum, der groß gegenüber der Meßzeit ist, konstant ist, mehrmals durchlaufen. Dieser Fall langsam ablaufender Prozesse tritt insbesondere bei Absorption in einer Flamme oder einer Kaltdampfzelle auf.

Für sehr schnell ablaufende Prozesse, wie beispielsweise eine Atomisierung in einem Atomisierungsofen können anstatt einer Mittelwertbildung die Messungen in Abhängigkeit von der Zeit aufgezeichnet werden. Somit ist es mit dem oben beschriebenen Spektrometer und entsprechendem Verfahren auch möglich, eine zeitaufgelöste Atomabsorptionsspektroskopie durchzuführen.

Der Nachteil von oben beschriebenem Spektrometer und Verfahren ist es allerdings, daß sehr viel Meßzeit durch die Referenzmessung, also die zweite Phase R des Meßzyklus T, verloren geht. Dies ist insbesondere bei einer Atomisierung mit einem Atomisierungsofen kritisch, da in diesem Fall die zur Verfügung stehende Meßzeit prinzipiell sehr kurz ist.

Deshalb liegt der Erfindung die Aufgabe zugrunde, das aus dem Stand der Technik bekannte Spektrometer und das aus dem Stand der Technik bekannte Verfahren zur Durchführung einer Doppelstrahl-Atomabsorption zu verbessern.

Diese Aufgabe wird durch ein Atomabsorptionsspektrometer der eingangs genannte Art gelöst, das sich dadurch auszeichnet, daß eine Strahlenteilereinrichtung so vorgesehen ist, daß ein erster Teil der Linienstrahlung jeder Lichtquelle über den Meßlichtweg und gleichzeitig ein zweiter Teil der Linienstrahlung jeder Lichtquelle über den Referenzlichtweg führbar ist.

Durch die Strahlenteilereinrichtung kann die Linienstrahlung von der Lichtquelle geteilt werden und somit gleichzeitig sowohl in den Meßlichtweg als auch in den Referenzlichtweg eingekoppelt werden. Deshalb ist es möglich, die Messung an der Probe und die Referenzmessung gleichzeitig durchzuführen. Als Konsequenz kann demnach die zur Verfügung stehende Meßzeit erheblich vergrößert werden. Für den Fall, daß die Zeitdauern $T_P$ und $T_R$ für die Messung an der Probe bzw. die Referenzmessung gleich groß gewählt werden, ergibt sich beispielsweise eine Verdoppelung der zur Verfügung stehenden Meßzeit. Falls die Zeitdauern $T_P$ und $T_R$ unterschiedlich groß gewählt werden, ist der Gewinn an zusätzlicher Meßzeit durch die kleinere der beiden Zeitdauern gegeben.

Die Detektionseinrichtung kann hierbei einen ersten Detektor zur Detektion des ersten Teils der Linienstrahlung (Meßlicht) und einen zweiten Detektor zur Detektion des zweiten Teils der Linienstrahlung (Referenzlicht) aufweisen. Diese Ausbildung hat den Vorteil, daß ein bekanntes Atomabsorptionsspektrometer, wie es in Fig. 5 gezeigt ist, einfach nachgerüstet werden kann.

Gemäß einer bevorzugten Weiterbildung umfaßt das erfindungsgemäße Atomabsorptionsspektrometer eine Detektionseinrichtung mit einen einzigen Detektor, der wenigstens zwei Bereiche aufweist, wobei der erste Bereich zur Detektion des ersten Teils der Linienstrahlung und der zweite Bereich zur Detektion des zweiten Teils der Linienstrahlung vorgesehen sind. Vorteil dieser Anordnung ist es, daß lediglich ein einziger Detektor vorgesehen werden muß, und deshalb die Detektoreinrichtung kleiner und billiger ausgebildet werden kann.

Der Detektor oder die Detektoren können in Form eines Halbleiterdetektors, beispielsweise unter Verwendung von Photodioden- oder CCD- Strukturen, ausgebildet sein.

In dem erfindungsgemäßen Atomabsorptionsspektrometer lassen sich alle auf dem Gebiet der Atomabsorption bekannten Linienstrahlungsquellen einsetzen. Zweckmäßigerweise lassen sich beispielsweise Hohlkathodenlampen oder eine elektrodenlose Entladungslampen verwenden.

Dem Detektor oder den Detektoren kann jeweils eine Monochromatoreinrichtung vorgeschaltet werden.

Gemäß einer Weiterbildung kann die Monochromatoreinrichtung einen Eintrittsspalt aufweisen, wobei der erste und der zweite Teil der Linienstrahlung in Längsrichtung des Eintrittsspalts voneinander getrennt auf den Eintrittsspalt abgebildet werden. Durch diese Anordnung kann eine einfache Detektoranordnung realisiert werden.

Gemäß einer Weiterbildung dieser Ausgestaltung kann der zweite Teil der Linienstrahlung zwischen der Strahlteilereinrichtung und dem Eintrittsspalt über eine Lichtleiterverbindung, beispielsweise in Form einer Glasfaserverbindung, geführt werden. Hierdurch wird vermieden, daß neben dem Meßlichtweg ein weiterer Lichtweg durch optischen Elemente, wie Spiegel und/oder Linsen aufgebaut werden muß. Dadurch daß in dieser Ausgestaltung von optischen Elementen im Referenzlichtweg abgesehen wird, ist keine Justierung von optischen Elementen im Referenzlichtweg nötig, wodurch die Justierung des Atomabsorptionsspektrometer vergleichsweise einfacher ist. Weiterhin kann durch die Lichtleiterverbindung der Referenzlichtweg wesentlich flexibler in dem Atomabsorptionsspektrometer vorgesehen werden. Hierdurch kann das Atomabsorptionsspektrometer vergleichsweise kleiner ausgebildet werden.

Anstatt des Monochromators können in dem Atomabsorptionsspektrometer auch ein bzw. mehrere Polychromatoren, vorzugsweise in Verbindung mit CCD-Detektoren oder einem Photodiodenfeld eingesetzt werden. Dadurch können bewegliche Teile, wie sie in bekannten Monochromatoren vorgesehen sind, vermieden werden. Somit entfällt eine zusätzliche Justierung, wie im Fall eines Monochromators.

Als Atomisierungseinrichtung lassen sich beim erfindungsgemäßen Atomabsorptionsspektrometer alle aus dem Gebiet der Atomabsorption bekannten Atomisierungseinrichtungen, wie beispielsweise ein Atomisierungsofen, eine Flamme oder eine Kaltdampfzelle, einsetzen.

Gemäß einer vorteilhaften Weiterbildung kann die Atomisierungseinrichtung einen Atomisierungsofen, und/oder eine Flamme und/oder eine Kaltdampfzelle, die wahlweise in den Meßlichtweg einbringbar sind, umfassen. Ein derartiges Atomabsorptionsspektrometer hat den Vorteil, daß es direkt für eine Vielzahl von Anwendungen einsetzbar ist, ohne daß Umbauten des Spektrometers erforderlich sind.

Vorzugsweise können die verschiedenen Atomisierungseinrichtungen so vorgesehen werden, daß das Einbringen in Meßlichtweg automatisiert, beispielsweise unter Einsatz einer Mikroprozessorsteuerung, erfolgen kann. Mit einer derartigen Anordnung können die Atomabsorptionsmessungen durch entsprechende Programmierung des Prozessors automatisiert durchgeführt werden.

Gemäß einer weiteren vorteilhaften Ausführung der Erfindung kann in dem Atomabsorptionsspektrometer eine Kontinuumslichtquelle, beispielsweise eine D2-Lampe, derart vorgesehen werden, daß mittels der Strahlteilereinrichtung ein erster Teil der Kontinuumsstrahlung dieser Lichtquelle in den Meßlichtweg und ein zweiter Teil der Kontinuumsstrahlung dieser Lichtquelle in den Referenzlichtweg einkoppelbar ist. Durch diese Anordnung kann mit der Kontinuumslichtquelle ebenfalls eine Messung an der Probe sowie eine Referenzmessung durchgeführt werden. Mit diesen beiden Messungen kann schließlich an den Meßergebnisse der Atomabsorption eine Untergrundkompensation durchgeführt werden.

Weiterhin können in einer weiteren vorteilhaften Ausführung die Intensitäten einer jeden Lichtquelle zeitlich steuerbar vorgesehen werden. Somit ist es möglich einen vorgegebenen Meßzyklus durch Änderung der Intensität der Linienstrahlung bzw. der Linienstrahlung und der Kontinuumsstrahlung zu realisieren. Darüber hinaus lassen sich für eine gegebene Anwendung jeweils die günstigsten Signal/Rausch-Verhältnisse einfach einstellen.

Außerdem wird die der Erfindung zugrunde liegende Aufgabe durch ein Verfahren zur Durchführung einer Doppelstrahl-Atomabsorption der eingangs genannten Art gelöst, das sich dadurch auszeichnet, daß das Messen der Intensität der Strahlung, die den Meßlichtweg durchlaufen hat, und das Messen der Intensität der Strahlung, die den Referenzlichtweg durchlaufen hat, gleichzeitig durchgeführt wird.

Durch das gleichzeitige Messen der Strahlung, die den Meßlichtweg und den Referenzlichtweg durchlaufen haben, kann der Meßzeitverlust, der bei der Doppelstrahl-Atomabsorption aufgrund der zeitlich nachgeschalteten Referenzmessung auftritt, vermieden werden. Hierdurch können in gleicher Zeit wesentlich mehr Meßergebnisse erhalten werden, wodurch das Signal/Rauschverhältnis verbessert werden kann.

Dies führt zum einen dazu, daß bei zeitaufgelöster Spektroskopie die Zeitauflösung vergrößert werden kann.

Zum anderen können durch dieses Verfahren, insbesondere bei sehr schnell ablaufenden Atomisierungsprozessen, genauere Ergebnisse erzielt werden.

Entsprechend einer besonders vorteilhaften Ausführungsform umfaßt das erfindungsgemäße Verfahren weiter die Schritte: gleichzeitiges Koppeln von Strahlung aus einer Kontinuumslichtquelle in den Meßlichtweg und in den Referenzlichtweg, gleichzeitiges Messen der Intensität der Kontinuumsstrahlung, die den Meßlichtweg durchlaufen hat, und der Intensität der Kontinuumsstrahlung, die den Referenzlichtweg durchlaufen hat, Ermitteln der durch die atomisierte Probe absorbierten Strahlung aus der Intensität der Kontinuumsstrahlung, die den Meßlichtweg durchlaufen hat, und der Intensität der Kontinuumsstrahlung, die den Referenzlichtweg durchlaufen hat, Korrigieren der durch die Probe absorbierten Linienstrahlung mittels der durch die Probe absorbierten Untergrundstrahlung.

Das gleichzeitige Messen der Intensität der Linienstrahlung und das gleichzeitige Messen der Intensität der Kontinuumsstrahlung kann hierbei gemäß einem Meßzyklus ablaufen, der eine Messung der Kontinuumsstrahlung und eine Messung der Linienstrahlung umfaßt.

Hierzu können die Meßzeit für die Messung der Kontinuumsstrahlung und die Meßzeit für die Messung der Linienstrahlung in Abhängigkeit von dem verwendeten Atomisierungsprozeß, von der Intensität der Linienlichtquelle und der Intensität der Kontinuumslichtquelle, sowie von der Änderungsrate der Untergrundabsorption eingestellt werden

Durch diese flexible Zeitablaufsteuerung kann die jeweilige Meßzeit in bezug auf die spezifische Durchführung der Atomabsorption, die zum Nachweis eines bestimmten Elements erforderlich ist, unter Berücksichtigung des für den jeweiligen Nachweis günstigsten Signal/Rauschverhältnis optimiert werden.

In einer Weiterbildung des Verfahrens kann zusätzlich eine Phase vorgesehen werden, in der die von der Atomisierungseinrichtung abgegebene Strahlung gemessen wird. Während derartiger Phasen, die im folgenden als Dunkelphasen bezeichnet werden, wird weder Strahlung von der Linien emittierenden Lichtquelle bzw. von der Linien emittierenden Lichtquelle oder der Kontinuumsstrahlung emittierenden Lichtquelle ausgegeben.

Durch die Messung in den sogenannten Dunkelphasen kann die Absorptionsmessung bezüglich der von der Atomisierungseinrichtung selbst abgegebenen Strahlung korrigiert werden. Im Fall eines Atomisierungsofens oder einer Flamme wird eine derartige Strahlung in Form von Temperaturstrahlung abgegeben. Darüber hinaus kann eine solche Strahlung auch durch spontane Emission oder ähnliche physikalische Prozesse der an der Messung beteiligten Stoffe erzeugt werden. Durch Berücksichtigung dieser Strahlung wird ein etwaiger Einfluß der Atomisierungseinrichtung auf die Absorptionsmessung korrigiert. Insgesamt kann somit die Genauigkeit der Messung erhöht werden.

Das gleichzeitige Messen der Intensität der Linienstrahlung, das gleichzeitige Messen der Intensität der Kontinuumsstrahlung und das Messen der Intensität der von der Atomisierungseinrichtung abgegebenen Strahlung können vorteilhafterweise gemäß einem Meßzyklus, der eine erste Messung der von der Atomisierungseinrichtung abgegebenen Strahlung, eine erste Messung der Kontinuumsstrahlung, eine zweite Messung der von der Atomisierungseinrichtung abgegebenen Strahlung, eine Messung der Linienstrahlung, eine dritte Messung der von der Atomisierungseinrichtung abgegebenen Strahlung und eine zweite Messung der Kontinuumsstrahlung umfaßt, durchgeführt werden.

Vorteilhafterweise lassen sich hierbei die Meßzeit für die erste Messung der von der Atomisierungseinrichtung abgegebenen Strahlung, die Meßzeit für die erste Messung der Kontinuumsstrahlung, die Meßzeit für die zweite Messung der von der Atomisierungseinrichtung abgegebenen Strahlung, die Meßzeit für die Messung der Linienstrahlung, die Meßzeit für die dritte Messung der von der Atomisierungseinrichtung abgegebenen Strahlung, und die Meßzeit für die zweite Messung der Kontinuumsstrahlung in Abhängigkeit von dem verwendeten Atomisierungsprozeß, von der Intensität der Linienlichtquelle und der Intensität der Kontinuumslichtquelle, der Intensität der durch die Atomisierungseinrichtung erzeugten Strahlung, sowie von der Änderungsrate der Untergrundabsorption einstellten.

Durch diese vorteilhafte Ausgestaltung lassen sich ebenfalls die bereits oben diskutierten Vorteile bezüglich der flexiblen Zeitablaufsteuerung erzielen. Darüber hinaus werden bei der flexiblen Zeitablaufsteuerung gemäß diesem Verfahren außerdem die von der Atomisierungseinrichtung abgegebene Strahlung berücksichtigt. Insbesondere kann deshalb in Abhängigkeit von dem thermischen Verhalten des Atomisierungsofen jeweils der Meßzyklus ausgewählt werden, der die Dunkelphasen und die Korrektur der Atomabsorptionsmessung optimiert, also zum Erhalten einer möglichst genauen Korrektur möglichst kurze Dunkelphasen verwendet.

Weitere Vorteile der Erfindung ergeben sich aus der folgenden, beispielhaften Beschreibung bevorzugter Ausführungsformen der Erfindung unter Bezugnahme auf die Zeichnung. In der Zeichnung zeigen:

Fig. 1    ein Atomabsorptionsspektrometer gemäß einer ersten Ausführungsform der Erfindung,

Fig. 2    ein Atomabsorptionsspektrometer gemäß einer zweiten Ausführungsform der Erfindung,

Fig. 3    ein Atomabsorptionsspektrometer gemäß einer dritten Ausführungsform der Erfindung,

Fig. 4    ein Atomabsorptionsspektrometer gemäß einer vierten Ausführungsform der Erfindung,

Fig. 5    ein Atomabsorptionsspektrometer gemäß dem Stand der Technik,

Fig. 6    ein Zeitablaufdiagramm eines Verfahrens zur Durchführung einer Doppelstrahl-Atomabsorption gemäß einer ersten Ausführungsform der Erfindung,

Fig. 7    ein Zeitablaufdiagramm eines Verfahrens zur Durchführung einer Doppelstrahl-Atomabsorption gemäß einer zweiten Ausführungsform der Erfindung,

Fig. 8    ein Zeitablaufdiagramm eines Verfahrens zur Durchführung einer Doppelstrahl-Atomabsorption gemäß einer dritten Ausführungsform der Erfindung,

Fig. 9    ein erstes Beispiel einer Zeitablaufsteuerung zur Durchführung des Verfahrens gemäß der dritten Ausführungsform der Erfindung,

Fig. 10    ein zweites Beispiel einer Zeitablaufsteuerung zur Durchführung des Verfahrens gemäß der dritten Ausführungsform der Erfindung,

Fig. 11    ein drittes Beispiel einer Zeitablaufsteuerung zur Durchführung des Verfahrens gemäß der dritten Ausführungsform der Erfindung,

Fig. 12    ein viertes Beispiel einer Zeitablaufsteuerung zur Durchführung des Verfahrens gemäß der dritten Ausführungsform der Erfindung,

Fig. 13    ein fünftes Beispiel einer Zeitablaufsteuerung zur Durchführung des Verfahrens gemäß der dritten Ausführungsform der Erfindung,

Fig. 14    ein Zeitablaufdiagramm eines Verfahrens zur Durchführung einer Doppelstrahl-Atomabsorption gemäß dem Stand der Technik.

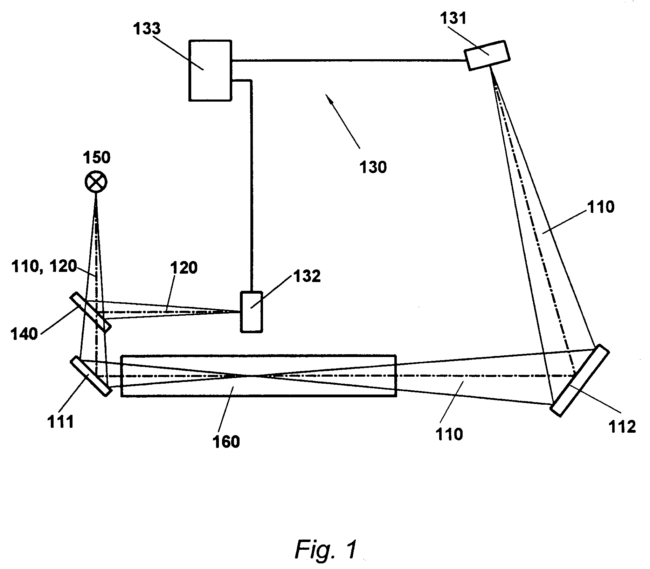

Fig. 1 zeigt ein Atomabsorptionsspektrometer 100 gemäß einer ersten Ausführungsform der vorliegenden Erfindung.

Das Atomabsorptionsspektrometer 100 umfaßt einen Meßlichtweg 110 und einen Referenzlichtweg 120.

Der Meßlichtweg 110 geht von einer Lichtquelle 150 aus, die Linienstrahlung eines Elements aussendet, das in einer zu untersuchenden Probe nachgewiesen werden soll. Als Lichtquelle 150 können alle auf dem Gebiet der Atomabsorption bekannten Lichtquellen verwendet werden. In der vorliegenden Ausführungsform wird beispielsweise eine Hohlkathodenlampe als Lichtquelle 150 eingesetzt. Alternativ lassen sich allerdings auch andere auf dem Gebiet der Atomabsorption bekannte Lichtquellen, wie beispielsweise elektrodenlose Entladungslampen, verwenden.

Ein Teil der von der Lichtquelle 150 ausgesendeten Linienstrahlung läuft in Form eines Meßstrahls auf dem Meßlichtweg 110 durch eine Strahlenteilereinrichtung 140 und anschließend über ein erstes optisches Element 111 in eine Atomisierungseinrichtung 160, in der beim Betrieb des Atomabsorptionsspektrometers die von der Lichtquelle 150 emittierte Linienstrahlung entsprechend der Konzentration des nachzuweisenden Elements absorbiert wird.

Diese Atomisierungseinrichtung 160 ist in Fig. 1 schematisch dargestellt. Als Atomisierungseinrichtung lassen sich erfindungsgemäß alle auf dem Gebiet der Atomabsorptionsspektroskopie bekannten Atomisierungseinrichtungen, wie beispielsweise ein Atomisierungsofen, eine Flamme oder eine Kaltdampfzelle einsetzen.

Die Atomisierungseinrichtung 160 kann darüber hinaus auch so ausgebildet sein, daß sie einen Atomisierungsofen, eine Flamme und eine Kaltdampfzelle aufweist, die auf einem Magazin derart angeordnet sind, daß sie wahlweise in den Meßlichtweg einbringbar sind.

Nachdem der Meßstrahl die Atomisierungseinrichtung durchlaufen hat, wird er von einem zweiten optischen Element 112 auf ein Detektorelement 131 einer Detektionseinrichtung 130, mit dem die Intensität dieses Meßstrahls detektierbar ist, abgebildet. In der in Fig. 1 gezeigten Ausführung ist dem Detektor 131 ist eine Dispersioneinrichtung (nicht gezeigt) vorgeschaltet, so daß die auf den Detektor auftreffende Strahlung bezüglich ihrer Wellenlänge räumlich auflösbar ist. Als Detektorelement 131 kann beispielsweise ein Photodiodenfeld oder ein CCD-Detektor verwendet werden.

Die optischen Elemente 111 und 112 sind gemäß Fig. 1 in Form von Spiegeln vorgesehen und dienen zur Umlenkung des Meßlichtwegs. Weiterhin können als optische Elemente auch Linsen zur Fokussierung des Meßlichtstrahls und/oder Referenzstrahls eingesetzt werden. Die optischen Elemente können, je nach Anordnung von Lichtquelle, Atomisierungseinrichtung und Detektoreinrichtung, vorgesehen werden.

Der Referenzlichtweg 120 beginnt ebenso wie der Meßlichtweg 110 an der Lichtquelle 150. Der andere Teil der von dieser Lichtquelle ausgesendeten Linienstrahlung wird dann in Form eines Referenzstrahls von der Strahlenteilereinrichtung 140 auf ein zweites Detektorelement 132 der Detektoreinrichtung 130, mit dem die Intensität dieses Referenzstrahls nachweisbar ist, abgebildet. Ebenso wie dem Detektorelement 131 ist auch diesem Detektorelement 132 eine Dispersionseinrichtung vorgeschaltet, damit die zu detektierende Strahlung bezüglich ihrer Wellenlänge räumlich aufgelöst werden kann. Als Detektorelement 132 kann wiederum ein Halbleiterdetektor, beispielsweise in Form eines Photodiodenfelds oder eines CCD-Detektors verwendet werden.

Die Strahlteilereinrichtung 140 kann in Form einer halodurchlässigen Platte vorgesehen werden. Weiterhin muß von der Einrichtung bekannt sein, in welchem Verhältnis die einfallende Strahlung aufgeteilt wird. Zweckmäßigerweise kann das Verhältnis in Abhängigkeit von der zu erwartenden Absorption so eingestellt werden, daß beide Detektorelemente 131 und 132 in ihrem optimalen Bereich in Bezug auf das Signal/Rauschverhältnis arbeiten.

Weiterhin umfaßt die Detektionseinrichtung 130 eine Auswerteeinheit 133, die vorteilhafterweise in Form eines Computers ausgebildet sein kann. In dieser Auswerteeinheit wird aus den in den Detektorelementen 131 und 132 gemessenen Intensitäten die von der Probe absorbierte Intensität bestimmt und aus dieser Intensität schließlich die Konzentration des in der zu untersuchenden Probe nachzuweisenden Elements ermittelt.

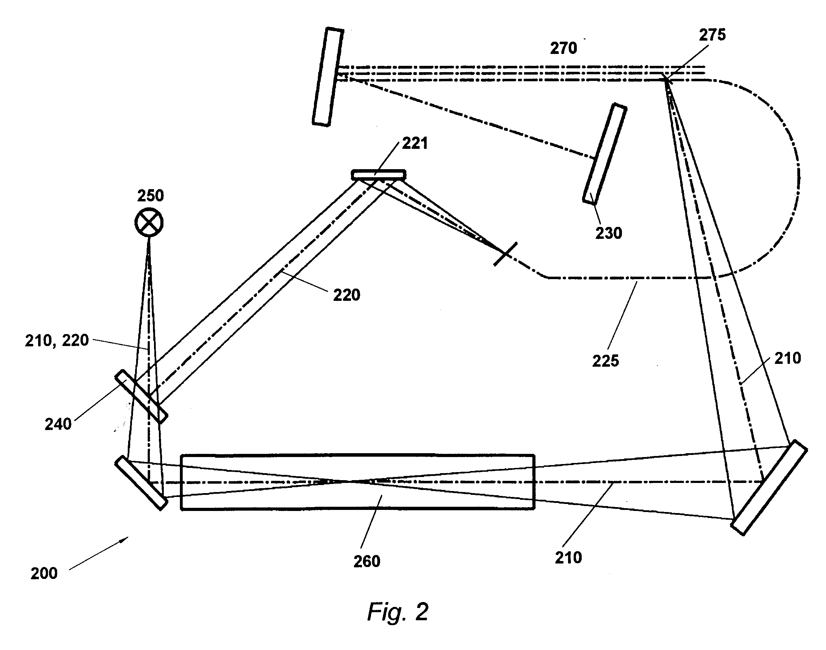

In Fig. 2 ist eine weitere Ausführungsform eines Atomabsorptionsspektrometers 200 gezeigt. Dieses Atomabsorptionsspektrometer umfaßt ebenfalls eine Lichtquelle 250, eine Atomisierungseinrichtung 260, sowie eine Detektoreinrichtung 230.

Die in Fig. 1 und Fig. 2 gezeigten Spektrometer unterscheiden sich lediglich in ihren Detektionseinrichtungen 130 und 230 und in der Führung der Referenzlichtwege 120 und 220 voneinander. Im folgenden wird deshalb lediglich auf die Detektionseinrichtung 230 und die Führung des Referenzlichtwegs 220 eingegangen. In bezug auf die Einrichtungen, die in beiden Spektrometern identisch sind, wird auf die entsprechenden Abschnitte der Beschreibung von Fig. 1 verwiesen. In diesem Zusammenhang bleibt anzumerken, daß sich die Bezugszeichen einander entsprechender Elemente lediglich in ihrer ersten Ziffer unterscheiden.

Der Detektionseinrichtung 230 ist im Gegensatz zur Detektionseinrichtung 130 in Fig. 1 ein Spaltmonochromator 270 mit einem Eintrittsspalt 275, auf den der Meßlichtstrahl und, in Längsrichtung des Spalts 275 versetzt, der Referenzlichtstrahl abgebildet werden.

Der Referenzlichtweg verläuft hierbei ausgehend von der Strahlenteilereinrichtung 240 über ein optisches Element 221 und eine Lichtleiterverbindung 225 zu dem Eintrittsspalt 275 des Monochromators. Als Lichtleiterverbindung lassen sich alle bekannten Lichtleiter, beispielsweise Glasfasern aus geeigneten Materialen, einsetzen. Diese Ausgestaltung, insbesondere die Verwendung der Lichtleiterverbindung, ermöglicht eine wesentlich flexiblere Führung des Referenzlichtwegs 220 als dies beispielsweise durch Spiegel und Linsen möglich ist. Deshalb kann das Spektrometer insgesamt kleiner ausgebildet werden. Darüber hinaus entfällt auch eine Justierung der Spiegel, die erforderlich sind, um den Referenzstrahl genau auf den Eintrittsspalt 275 abzubilden.

Nachdem die Meßstrahlung und die Referenzstrahlung den Monochromator durchlaufen haben, treffen sie räumlich voneinander getrennt auf ein Detektorelement 231 auf. Als Detektorelemente eignen sich, wie im Fall der Vorrichtung gemäß Fig. 1, Halbleiterdetektoren in Form von Photodiodenfeldern oder CCD-Detektoren. Es muß allerdings sichergestellt sein, daß Meßstrahlung und die Referenzstrahlung räumlich voneinander getrennt gemessen werden können.

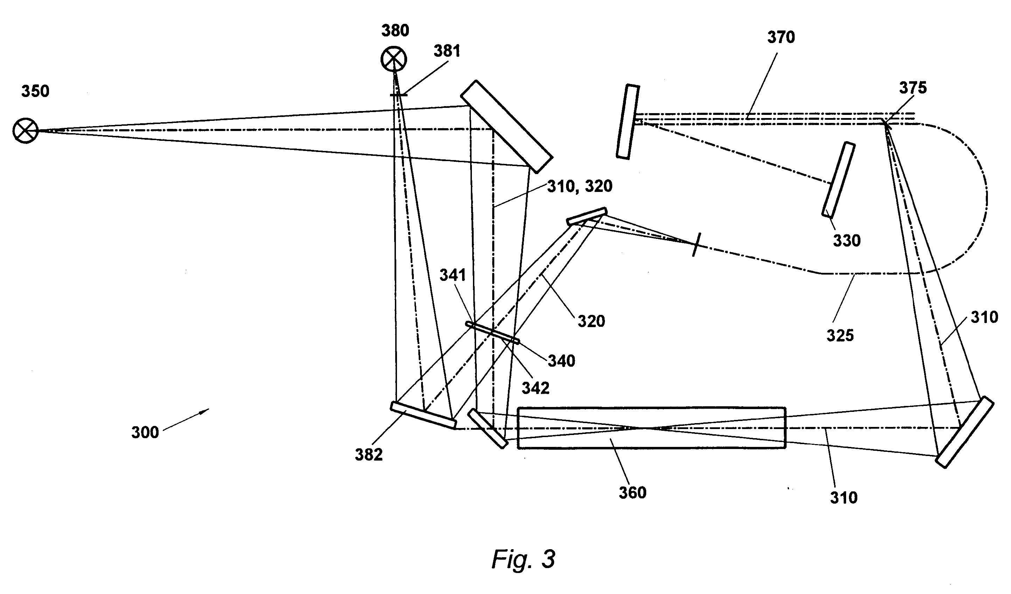

In Fig. 3 ist eine weitere Ausführungsform eines Atomabsorptionsspektrometers 300 gemäß der Erfindung gezeigt.

Dieses Spektrometer 300 unterscheidet sich von dem in Fig. 2 gezeigten Spektrometer, dadurch daß zusätzlich eine Einrichtung zur D2-Korrektur des Absorptionsmessung vorgesehen ist. Im folgenden wird deshalb lediglich auf diesen Unterschied eingegangen. Zur Beschreibung der verbleibenden Komponenten wird auf die entsprechenden Abschnitte der Beschreibung der Fig. 2 bzw. der Fig. 1 verwiesen. Die Bezugszeichen wurden hier wiederum so gewählt, daß sich die Bezugszeichen der einander entsprechenden Komponenten lediglich in ihrer ersten Ziffer voneinander unterscheiden.

Zur D2-Korrektur der Absortion ist eine Lichtquelle 380 in Form einer D2-Kontinuumslampe vorgesehen.

Die von der Lichtquelle 380 emittierte Kontinuumsstrahlung fällt über ein optisches Element 382 auf die Strahlenteilereinrichtung 340. Dort wird sie, ebenso wie die von der Lichtquelle 350 emittierte Linienstrahlung, in einen Meßstrahl und einen Referenzstrahl aufgeteilt. Die Lichtwege für die Kontinuumsstrahlung sind mit den Lichtwegen für die Linienstrahlung nach der Strahlenteilereinrichtung 340 (von den entsprechenden Lichtquellen 380 bzw. 350 aus gesehen) identisch. Demnach werden der Kontinuums-Meßstrahl, nachdem er die Atomisierungseinrichtung 360 durchlaufen hat, und der Kontinuums-Referenzstrahl räumlich voneinander getrennt auf den Eintrittsspalt 375 des Monochromators und schließlich auf die Detektionseinrichtung 330 abgebildet.

Vor der Kontinuumslichtquelle 380 ist ein Abschwächeinrichtung 381 angeordnet. Diese Abschwächeinrichtung kann beispielsweise in Form eines Absorptionsgitters oder Tranmissionsfilters vorgesehen werden. Durch dieses Gitter bzw. diesen Filter kann die Intensität der Kontinuumslichtquelle an die Intensität der Linienlichtquelle angepaßt werden.

Alternativ zu der Abschwächeinrichtung 381 kann in der in Fig. 3 gezeigten Anordnung auch der Strahlenteiler 340 zur Anpassung der Intensität der Kontinuumslichtquelle an die Intensität der Linienlichtquelle verwendet werden. Hierzu muß der Strahlenteiler ein Reflexions/Transmissionsverhältnis aufweisen, das ungleich 1 ist. Da in der Fig. 3 gezeigten Anordnung das Linienlicht und das Kontinuumslicht jeweils auf den einander gegenüberliegenden Seiten des Strahlenteilers eingekoppelt werden, werden beispielsweise bei einem Reflexions/Transmissionsverhältnis von 40:60 durch den Strahlenteiler 60% des auf der Seite 341 einfallenden Linienlichts in den Meßlichtweg hindurch gelassen. Andererseits reflektiert der Strahlenteiler auf der anderen Seite 342 40% des Kontinuumslichts in den Meßlichtweg.

Als weitere Möglichkeit zur Anpassung der Intensität der Kontinuumslichtquelle kann die Lichtquelle selbst gesteuert werden. Hierzu kann entweder die Energiezufuhr zur Lichtquelle oder die zur Messung verwendete Integrationszeit verändert werden.

Die Änderung der Integrationszeit, die noch im Zusammenhang mit den Verfahren gemäß der vorliegenden Erfindung beschrieben wird, stellt hierbei die vorteilhafteste Anpassung der Kontinuumslichtquelle an die Linienlichtquelle dar. Insbesondere kann eine Steuerung der Lichtquellen ohne Umbau des Spektrometers, also ohne Austauschen der Strahlenteilereinrichtung und/oder der Abschwächeinrichtung, durchgeführt werden. Weiterhin wird, insbesondere im Gegensatz zu einer Verwendung einer Abschwächeinrichtung, die gesamte ausgestrahlte Kontinuumsstrahlung genutzt, wodurch ein effizienter Einsatz der Lichtquelle gewährleistet ist. Demnach stellt die Änderung der Intgrationszeit die flexibelste Anpassung der D2-Lichtquelle an die Linienlichtquelle dar.

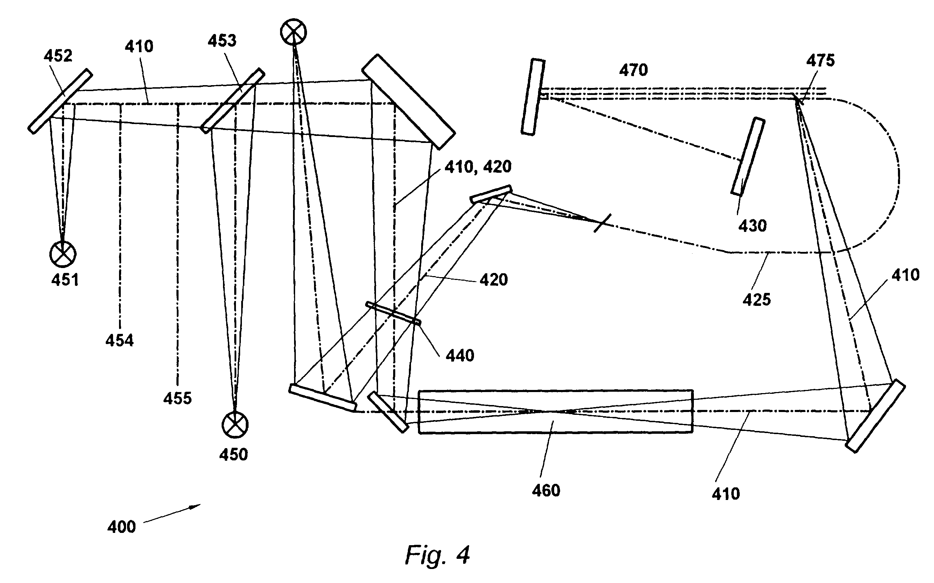

In Fig. 4 ist eine weitere Ausführung eines Atomabsorptionsspektrometers 400 gemäß der vorliegenden Erfindung gezeigt. Dieses Atomabsorptionsspektrometer unterscheidet sich von dem in Fig. 3 gezeigten Spektrometer nur dadurch, daß eine weitere Lichtquelle 451, die eine Linienstrahlung eines in der zu untersuchenden Probe nachzuweisenden Elements emittiert, vorgesehen ist. Zur Beschreibung der verbleibenden Komponenten wird deshalb auf die entsprechenden Abschnitte der Beschreibung der Fig. 3, der Fig. 2 bzw. der Fig. 1 verwiesen. Die Bezugszeichen wurden hier so gewählt, daß sich die Bezugszeichen der einander entsprechenden Komponenten lediglich in ihrer ersten Ziffer voneinander unterscheiden.

Die Linienstrahlung dieser Lichtquelle 451 wird über ein optisches Element 452 umgelenkt und über ein weiteres optisches Element 453 in den Meßlichtweg bzw. den Referenzlichtweg eingekoppelt.

Weiterhin ist in Fig. 4 durch die Bezugszeichen 454 und 455 angedeutet, daß ggf. weitere Lichtquellen zur Emission von Linienstrahlung gleichermaßen vorgesehen werden können.

Im folgenden wird ein Verfahren zur Durchführung einer Doppelstrahl-Atomabsorption gemäß einer ersten Ausführungsform der Erfindung beschrieben.

Dieses Verfahren kann mit einem Atomabsorptionsspektrometer gemäß einer der oben dargestellten Ausführungsformen der vorliegenden Erfindung durchgeführt werden. Im folgenden wird dieses Verfahren unter Bezugnahme auf das Atomabsorptionsspektrometer gemäß Fig. 1 beschrieben.

In diesem Verfahren wird ein Teil der Strahlung aus einer jeweils Linienstrahlung eines nachzuweisenden Elements emittierenden Lichtquelle 150 in einen Meßlichtweg 110, der von der Lichtquelle durch eine eine zu untersuchende, das nachzuweisende Element enthaltende Probe in den atomisierten Zustand versetzende Atomisierungseinrichtung 160 zu einer Detektionseinrichtung 130 führt, gekoppelt.

Mittels des Strahlteilers 140, wird restliche Teil der Strahlung aus der Lichtquelle 150 in einen Referenzlichtweg, der von der Lichtquelle 150 direkt zu der Detektionseinrichtung 130 führt, gekoppelt.

Mit der Detektoreinrichtung 130 wird schließlich die Intensität der Strahlung, die den Meßlichtweg durchlaufen hat, und die Intensität der Strahlung, die den Referenzlichtweg durchlaufen hat, gemessen.

Aus der Intensität der Strahlung, die den Meßlichtweg durchlaufen hat, und der Strahlung, die den Referenzlichtweg durchlaufen hat, wird schließlich die Intensität der durch die atomisierte Probe absorbierten Strahlung ermittelt.

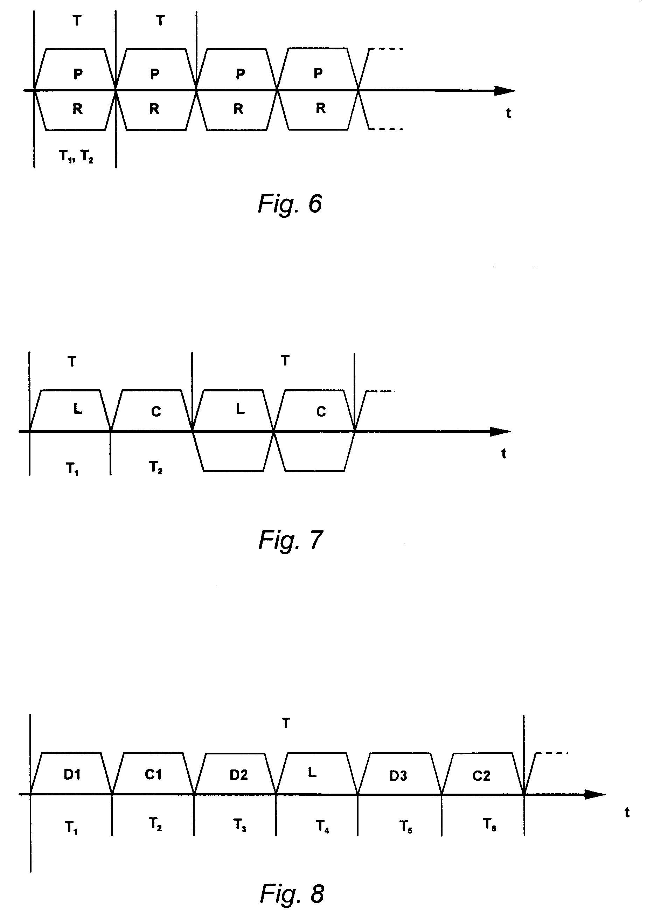

In Fig. 6 ist ein Zeitablaufdiagramm des oben beschriebenen Verfahrens dargestellt. Analog zu Fig. 14, in der ein Zeitablaufdiagramm eines Verfahrens gemäß dem Stand der Technik gegeben ist, zeigt Fig. 6 mehrere Meßzyklen T. Ebenso sind die Bezeichnungen der Phasen analog zu Fig. 14 gewählt. Demnach werden mit P die Messung an der Probe und mit R die Referenzmessung bezeichnet. Entsprechend Fig. 6 sind die Meßzeiten $T_P$ und $T_R$ gleich groß gewählt.

Wie aus Fig. 6 ersichtlich werden in dem erfindungsgemäßen Verfahren die Messungen an der Probe und die Referenzmessungen gleichzeitig durchgeführt. Dadurch ergibt sich gegenüber dem im Zusammenhang mit Fig. 14 beschriebenen Verfahren, in dem die Zykluszeit $T = T_P + T_R$ ist, eine Verringerung der Dauer des Zyklus auf $T = T_R = T_P$.

Nachfolgend wird ein Verfahren zur Durchführung einer Doppelstrahl-Atomabsorption gemäß einer zweiten Ausführungsform der Erfindung beschrieben.

In diesem Verfahren wird zusätzlich eine sogenannte D2-Korrektur, also eine Korrektur des Untergrunds, berücksichtigt. Demnach ist zur Durchführung dieses Verfahrens ein Atomabsorptionsspektrometer erforderlich, mit dem eine D2-Korrektur durchgeführt werden kann. Hierzu eignen sich beispielsweise die in Fig. 3 oder Fig. 4 gezeigten Atomabsorptionsspektrometer. Im folgenden wird das Verfahren unter Bezugnahme auf das Atomabsorptionsspektrometer gemäß Fig. 3 beschrieben.

Gegenüber dem oben beschriebenen ersten Verfahren wird in diesem Verfahren zusätzlich Strahlung aus einer Kontinuumslichtquelle 380 mittels eines Strahlteilers 340 sowohl in den Meßlichtweg 310 als auch in den Referenzlichtweg 320 gekoppelt. Mit einer Detektionseinrichtung 330 wird gleichzeitig die Intensität der Kontinuumsstrahlung, die den Meßlichtweg durchlaufen hat, und die Intensität der Kontinuumsstrahlung, die den Referenzlichtweg durchlaufen hat, gemessen.

Anschließend wird aus der Intensität der Kontinuumsstrahlung, die den Meßlichtweg durchlaufen hat, und der Intensität der Kontinuumsstrahlung, die den Referenzlichtweg durchlaufen hat, die durch die atomisierte Probe absorbierten Kontinuumsstrahlung ermittelt und die durch die Probe absorbierte Linienstrahlung mittels der durch die Probe absorbierten Kontinuumsstrahlung korrigiert.

In Fig. 7 ist ein Zeitablaufdiagramm der Messung der Linienstrahlung und der Kontinuumsstrahlung entsprechend dieses Verfahrens dargestellt. Dieses Zeitablaufdiagramm zeigt mehrere Meßzyklen mit jeweils einer Zyklusdauer T.

In einer ersten Phase L des Meßzyklus werden gleichzeitig die Messung der durch den Meßlichtweg und den Referenzlichtweg gelaufenen Linienstrahlung durchgeführt. Die Meßzeit beträgt hierbei $T_L$. In einer zweiten Phase C des Meßzyklus wird die durch den Meßlichtweg und den Referenzlichtweg gelaufene Kontinuumsstrahlung gemessen. Die Meßzeit beträgt hierbei $T_C$.

Die Meßzeiten $T_L$ und $T_C$ werden in diesem Verfahren in Abhängigkeit von der Intensität der Strahlungsquellen, von der Probenmatrix und dem in der Probe enthaltenem Element so eingestellt, daß sich ein optimales Signal/Rauschverhältnis ergibt.

Im folgenden wird ein Verfahren zur Durchführung einer Doppelstrahl-Atomabsorption gemäß einer dritten Ausführungsform der Erfindung beschrieben.

In diesem Verfahren wird im Vergleich zu dem zweiten oben beschriebenen Verfahren zusätzlich die von der Atomabsorptionseinrichtung emittierte Strahlung berücksichtigt. Diese Strahlung kann beispielsweise bei einem Atomisierungsofen oder einer Flamme in Form von Temperaturstrahlung vorliegen. Darüber hinaus kann diese Strahlung auch durch physikalische Prozesse, wie beispielsweise einer spontanen Emission der an der Atomisierung beteiligten Elemente, erzeugt werden.

Zur Durchführung des Verfahrens lassen sich analog zum zweiten Verfahren die in Fig. 3 und Fig. 4 beschriebenen Atomabsorptionsspektrometer verwenden.

Das dritte Verfahren unterscheidet sich von dem zweiten Verfahren dadurch, daß neben den im zweiten Verfahren durchgeführten Schritten auch die auf die Detektionseinrichtung auftreffende Strahlung auch während sogenannter Dunkelphasen, in denen weder Strahlung von der Linien emittierenden Lichtquelle oder der Kontinuumsstrahlung emittierenden Lichtquelle ausgesendet wird, gemessen wird.

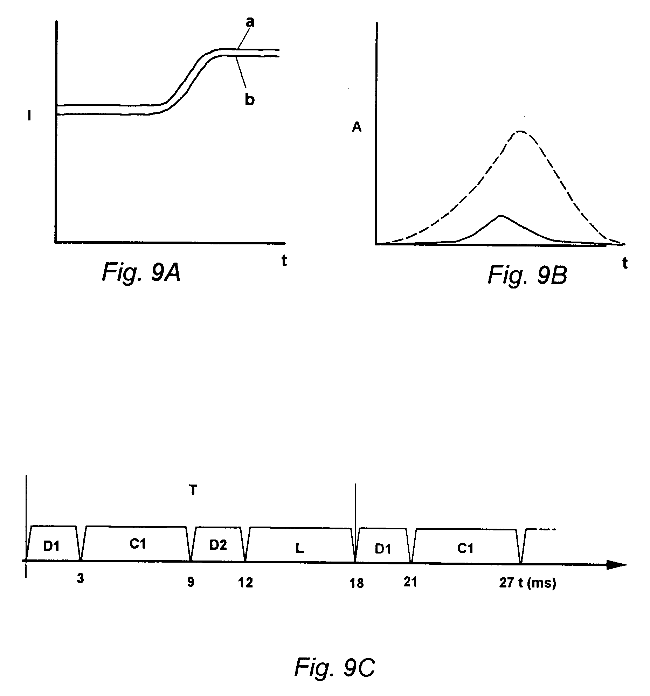

In Fig. 8 ist ein Zeitablaufdiagramm dieses Verfahrens dargestellt. Analog zu den Darstellungen in Fig. 6 und Fig. 7 ist in Fig. 8 ein Meßzyklus T gezeigt. Dieser Meßzyklus umfaßt in folgender zeitlicher Abfolge eine erste Messung der von der Atomisierungseinrichtung abgegebenen Strahlung D1 (sogenannte Dunkelphase), eine erste Messung der Kontinuumsstrahlung C1, eine zweite Messung der von der Atomisierungseinrichtung abgegebenen Strahlung D2, eine Messung der Linienstrahlung L, eine dritte Messung der von der Atomisierungseinrichtung abgegebenen Strahlung D3 und eine zweite Messung der Kontinuumsstrahlung C2.

Die einzelnen Messungen werden jeweils für eine bestimmte Zeitdauer durchgeführt. Insbesondere werden hierbei die Meßzeit $T_1$ für die erste Messung der von der Atomisierungseinrichtung abgegebenen Strahlung D1, die Meßzeit $T_2$ für die erste Messung der Kontinuumsstrahlung C1, die Meßzeit $T_3$ für die zweite Messung der von der Atomisierungseinrichtung abgegebenen Strahlung D2, die Meßzeit $T_4$ für die Messung der Linienstrahlung L, die Meßzeit $T_5$ für die dritte Messung der von der Atomisierungseinrichtung abgegebenen Strahlung D3, und die Meßzeit $T_6$ für die zweite Messung der Kontinuumsstrahlung C2 in Abhängigkeit von dem verwendeten Atomisierungsprozeß, von der Intensität der Linienlichtquelle und der Intensität der Kontinuumslichtquelle, der Intensität der durch die Atomisierungseinrichtung erzeugten Strahlung, sowie von der Änderungsrate der Untergrundabsorption eingestellt.

Die Meßzeiten werden hierbei so optimiert, daß sich bei möglichst kurzen Meßzeiten ein optimaler Korrekturwert sowohl für die D2-Korrektur als auch für die Korrektur bezüglich der von der Atomisierungseinrichtung emittierten Strahlung ergibt.

Im folgenden werden unter Bezugnahme auf die Fig. 9 bis 13 fünf Beispiele einer optimalen Zeitsteuerung zur Durchführung des Verfahrens gemäß der dritten Ausführungsform der vorliegenden Erfindung gegeben.

Beispiel 1:

In diesem Beispiel wurde ein Atomisierungsofen als Atomisierungseinrichtung verwendet. Das Atomabsorptionsspektrometer wurde unter Standardbedingungen betrieben. Ein Betrieb des Atomisierungsofens unter Standardbedingungen ist beispielsweise geeignet, um Beryllium in Legierungen nachzuweisen.

Wie aus Fig. 9A ersichtlich, in der Intensitäten I (y-Achse) gegen die Zeit t (x-Achse) aufgetragen sind, wobei die obere Kurve a die Intensität der Linienstrahlungsquelle (einschließlich Emission) und die untere Kurve b die Intensität der Kontinuumsstrahlungsquelle (einschließlich Emission) zeigen, hatten die Intensitäten der Lichtquelle für die Linienstrahlung und für die Kontinuumsstrahlung die gleiche Größenordnung. Weiterhin war die Strahlungsemission des Ofens etwas kleiner als die Intensität der Lichtquellen.

Fig. 9B, in welcher Absorptionsgrade (y-Achse) gegenüber der Zeit (x-Achse) aufgetragen sind, zeigt den Absorptionsgrad der Atomabsorption (ausgezogene Kurve) und den des Untergrunds (gestrichelte Kurve). Wie aus dieser Figur ersichtlich ist, hat sich Absorptionsgrads des Untergrunds im Vergleich zum Absorptionsgrad der Atomabsorption nur mäßig geändert.

Eine Optimierung des dritten Verfahrens ergibt für diese Standardbedingungen den in Fig. 9C gezeigten Meßzyklus. Entsprechend Fig. 9C ergeben sich für die einzelnen Phasen des Meßzyklus folgende Meßzeiten:

> T: 18 ms
> $T_1$: 3 ms (D1)
> $T_2$: 6ms (C1)
> $T_3$: 3 ms (D2)
> $T_4$: 6 ms (L)
> $T_5$: 0 ms (D3)
> $T_6$: 0 ms (C2)

Aus diesen optimierten Meßzeiten läßt sich ablesen, daß aufgrund der mäßigen Änderung der Absorption des Untergrunds nur eine Kontinuumsmessung pro Zyklus erforderlich ist.

Die korrigierte Linienstrahlung wird für diesen Meßzyklus wie folgt erhalten:

Der Mittelwert der Dunkelphasenmessungen D1 und D2 wird verwendet, um die Kontinuumsmessung C1 zu korrigieren. Der Mittelwert der Dunkelphasenmessungen D2 und D1 des nachfolgenden Zyklus wird verwendet, um die Linienmessung L zu korrigieren. Schließlich wird der Mittelwert von zwei Kontinuumsmessungen C1, die mit der Dunkelphasenmessung korrigiert worden sind, verwendet, um L zu korrigieren. Die Zeit zwischen den Messungen betrug 18ms.

Beispiel 2:

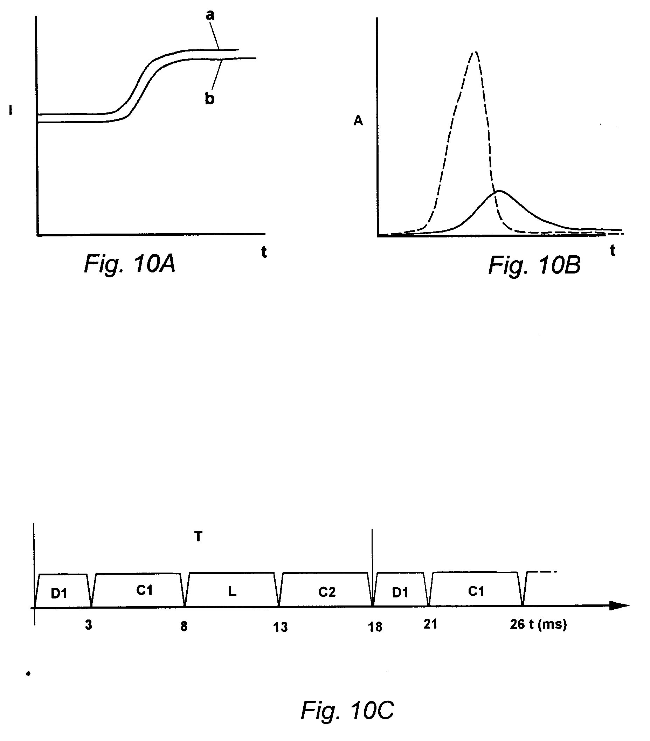

In diesem Beispiel wurde ebenfalls ein Atomisierungsofen als Atomisierungseinrichtung verwendet. Wie aus Fig. 10A ersichtlich, in der wiederum Intensitäten I (y-Achse) gegen die Zeit t (x-Achse) aufgetragen sind, wobei die obere Kurve a die Intensität der Linienstrahlungsquelle (einschließlich Emission) und die untere Kurve b die Intensität der Kontinuumsstrahlungsquelle (einschließlich Emission) zeigen, hatten auch in diesem Beispiel die Intensitäten der Lichtquelle für die Linienstrahlung und für die Kontinuumsstrahlung die gleiche Größenordnung. Die Ofenemission war relativ hoch im Vergleich zu den Lichtquellenintensitäten.

Darüber hinaus hatte sich der Absorptionsgrads des Untergrunds (gestrichelte Kurve) stark im Vergleich zur Absorptionsgrad der Atomabsorption (ausgezogene Kurve) geändert, wie in Fig. 10B, in der analog zu Fig. 9B der Absorptionsgrad A (y-Achse) gegen die Zeit t (x-Achse) aufgetragen ist, dargestellt.

Der Einsatz eines Atomisierungofens unter den oben beschriebenen Bedingungen eignet sich insbesondere zum Nachweis von Beryllium in biologischen Proben, wie Blut und dergleichen.

Eine Optimierung des dritten Verfahrens ergibt für diese Bedingungen den in Fig. 10C gezeigten Meßzyklus. Entsprechend Fig. 10C ergeben sich für die einzelnen Phasen des Meßzyklus folgende Meßzeiten:

T: 18 ms
$T_1$: 3 ms (D1)
$T_2$: 5 ms (C1)
$T_3$: 0 ms (D2)
$T_4$: 5 ms (L)
$T_5$: 0 ms (D3)
$T_6$: 5 ms (C2)

Wie aus diesen optimierten Meßzeiten ersichtlich, müssen im Gegensatz zu Beispiel 1 aufgrund der starken Änderung des Absorptionsgrads des Untergrunds beide Kontinuumsmessungen durchgeführt werden.

Die korrigierte Linienstrahlung wird für diesen Meßzyklus wie folgt erhalten:

Der Mittelwert der Dunkelphasenmessungen D1 zweier aufeinanderfolgender Meßzyklen wird verwendet, um die Messungen C1, L und C2 zu korrigieren. Dann wird der Mittelwert der Kontinuumsmessungen C1 und C2, die beide mit der Dunkelphasenmessung korrigiert worden sind, verwendet, um L zu korrigieren. Die Zeit zwischen den Messungen betrug 10ms.

Beispiel 3:

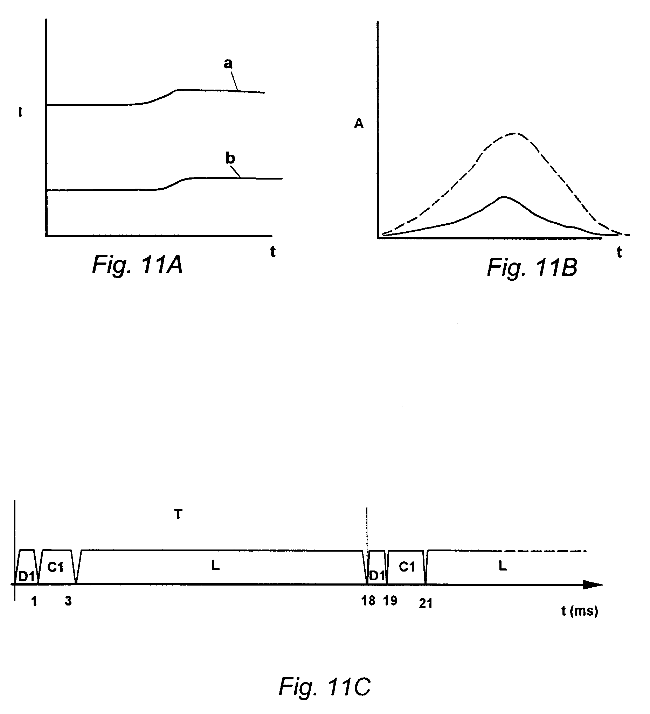

In diesem Beispiel wurde wiederum ein Atomisierungsofen als Atomisierungseinrichtung verwendet. Wie aus Fig. 11A ersichtlich, in der analog zu Fig. 9A und Fig. 10A Intensitäten I (y-Achse) gegen die Zeit t (x-Achse) aufgetragen sind, wobei die obere Kurve a die Intensität der Kontinuumsstrahlungsquelle (einschließlich Emission) und die untere Kurve b die Intensität der Linienstrahlungsquelle (einschließlich Emission) zeigen, war die Intensität der Lichtquelle für die Linienstrahlung wesentlich geringer als die Intensität für die Kontinuumsstrahlung. Weiterhin war die Strahlungsemission des Ofens im Vergleich zu den Intensitäten der Lichtquellen klein.

Wie aus Fig. 11B ersichtlich, in der analog zu Fig. 9B und Fig. 10B Absorptionsgrade A (y-Achse) gegen die Zeit t (x-Achse) aufgetragen sind, hat sich in diesem Beispiel der Absorptionsgrads des Untergrunds im Vergleich zum Absorptionsgrad der Atomabsorption nur mäßig geändert.

Der Einsatz eines Atomisierungofens unter diesen Bedingungen eignet sich unter anderem zum Nachweis von Arsen in biologischen Proben, wie Blut und dergleichen.

Eine Optimierung des dritten Verfahrens ergibt für diese Bedingungen den in Fig. 11C gezeigten Meßzyklus. Entsprechend Fig. 11C ergeben sich für die einzelnen Phasen des Meßzyklus folgende Meßzeiten:

T: 18 ms
$T_1$: 1 ms (D1)
$T_2$: 2 ms (C1)
$T_3$: 0 ms (D2)
$T_4$: 15 ms (L)
$T_5$: 0 ms (D3)
$T_6$: 0 ms (C2)

Wie aus diesen für die oben genannten Bedingungen optimierten Meßzeiten ersichtlich, muß aufgrund der geringen Intensität der Linienstrahlungsquelle eine vergleichsweise große Meßzeit für die Linienstrahlung durchgeführt werden. Im Vergleich zu Beispiel 1 wurde die integrierte Intensität für die Linienlichtquelle um einen Faktor 2,5 erhöht.

Da sich die Untergrundabsorption nur mäßig ändert, ist es ausreichend, lediglich eine Kontinuumsmessung pro Zyklus durchzuführen. Ebenso verhält es sich für die Dunkelphasenmessung.

Die korrigierte Linienstrahlung wird für diesen Meßzyklus wie folgt erhalten:

Der Mittelwert der Dunkelphasenmessungen D1 zweier aufeinanderfolgender Meßzyklen wird verwendet, um die Messungen C1 zu korrigieren. Dann wird der Mittelwert der Kontinuumsmessungen C1 zweier aufeinanderfolgender Zyklen, die beide mit der Dunkelphasenmessung korrigiert worden sind, verwendet, um L zu korrigieren. Die Zeit zwischen den Messungen betrug 18ms.

Beispiel 4:

In diesem Beispiel wurde eine Flamme als Atomisierungseinrichtung verwendet. Die Änderung der Absorptionskonstanten in diesem Beispiel war relativ langsam. Die Intensität der Linienstrahlungsquelle war relativ niedrig.

Die Verwendung einer Flamme als Atomisierungseinrichtung eignet sich beispielsweise zum Nachweis von Calcium in Wasser.

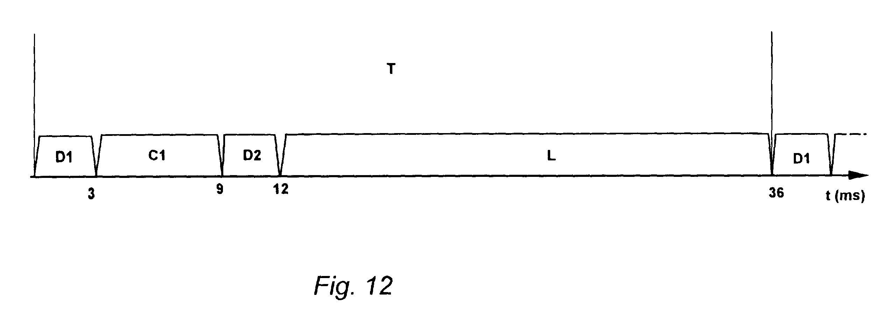

Eine Optimierung des dritten Verfahrens ergibt für diese Bedingungen den in Fig. 12 gezeigten Meßzyklus. Entsprechend Fig. 12 ergeben sich für die einzelnen Phasen des Meßzyklus folgende Meßzeiten:

T: 36 ms
$T_1$: 3 ms (D1)
$T_2$: 6 ms (C1)
$T_3$: 3 ms (D2)
$T_4$: 24 ms (L)
$T_5$: 0 ms (D3)
$T_6$: 0 ms (C2)

Die längere Linienmessungsintegrationszeit verringert in diesem Beispiel den relativen Beitrag des Detektorausleserauschens. Hierdurch wird das Gesamt-Signal/Rauschverhältnis verbessert.

Die korrigierte Linienstrahlung wird für diesen Meßzyklus wie folgt erhalten:

Der Mittelwert der Dunkelphasenmessungen D1 und D2 wird verwendet, um die Kontinuumsmessung C1 zu korrigieren. Der Mittelwert der Dunkelphasenmessungen D2 und D1 des nachfolgenden Zyklus wird verwendet, um die Linienmessung L zu korrigieren. Schließlich wird der Mittelwert von zwei Kontinuumsmessungen C1, die mit der Dunkelphasenmessung korrigiert worden sind, verwendet, um L zu korrigieren.

Beispiel 5:

In diesem Beispiel wurde eine Kaltdampfzelle als Atomisierungseinrichtung verwendet. Die Änderung der Absorptionskonstanten in diesem Beispiel war, wie in Beispiel 4, ebenfalls relativ langsam. Die Intensität der Linienstrahlungsquelle war relativ niedrig.

Der Einsatz einer Kaltdampfzelle unter den oben angegebenen Bedingungen ist insbesondere zum Nachweise von Quecksilber, besipielsweise in biologischen Proben, geeignet.

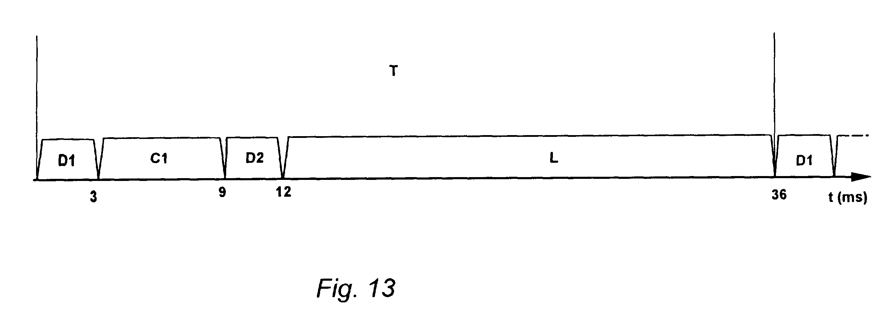

Eine Optimierung des dritten Verfahrens ergibt für diese Bedingungen den in Fig. 13 gezeigten Meßzyklus. Entsprechend Fig. 13 ergeben sich für die einzelnen Phasen des Meßzyklus folgende Meßzeiten:

T: 36 ms
$T_1$: 3 ms (D1)
$T_2$: 6 ms (C1)
$T_3$: 3 ms (D2)
$T_4$: 24 ms (L)
$T_5$: 0 ms (D3)
$T_6$: 0 ms (C2)

Die längere Linienmessungsintegrationszeit verringert auch in diesem Beispiel den relativen Beitrag des Detektorausleserauschens. Hierdurch wird das Gesamt-Signal/Rauschverhältnis verbessert.

Die korrigierte Linienstrahlung wird für diesen Meßzyklus wie folgt erhalten:

Der Mittelwert der Dunkelphasenmessungen D1 und D2 wird verwendet, um die Kontinuumsmessung C1 zu korrigieren. Der Mittelwert der Dunkelphasenmessungen D2 und D1 des nachfolgenden Zyklus wird verwendet, um die Linienmessung L zu korrigieren. Schließlich wird der Mittelwert von zwei Kontinuumsmessungen C1, die mit der Dunkelphasenmessung korrigiert worden sind, verwendet, um L zu korrigieren.

**Patentansprüche**

1. Atomabsorptionsspektrometer (100; 200; 300; 400), umfassend

einen Meßlichtweg (110; 210; 310; 410), der von wenigstens einer jeweils Linienstrahlung wenigstens eines nachzuweisenden Elements emittierenden Lichtquelle (150; 250; 350; 450, 451) durch eine eine zu untersuchende, das nachzuweisende Element enthaltende Probe in den atomisierten Zustand versetzende Atomisierungseinrichtung (160; 260; 360; 460) zu einer Detektionseinrichtung (130; 230; 330; 430) führt, und

einen Referenzlichtweg (120; 220; 320; 420), der von jeder Lichtquelle (150; 250; 350; 450, 451) zu der Detektionseinrichtung (130; 230; 330; 430) führt,
**dadurch gekennzeichnet, daß**

eine Strahlenteilereinrichtung (140; 240; 340; 440) so vorgesehen ist, daß ein erster Teil der Linienstrahlung jeder Lichtquelle (150; 250; 350; 450, 451) über den Meßlichtweg (110; 210; 310; 410) und gleichzeitig ein zweiter Teil der Linienstrahlung jeder Lichtquelle über den Referenzlichtweg (120; 220; 320; 420) führbar ist.

2. Atomabsorptionsspektrometer nach Anspruch 1, in welchem die Detektionseinrichtung einen ersten Detektor (131) zur Detektion des ersten Teils der Linienstrahlung und einen zweiten Detektor (132) zur Detektion des zweiten Teils der Linienstrahlung aufweist.

3. Atomabsorptionsspektrometer nach Anspruch 1, in welchem die Detektionseinrichtung einen Detektor (230; 330; 430) mit wenigstens zwei Bereichen umfaßt, von denen der erste Bereich zur Detektion des ersten Teils der Linienstrahlung und der zweite Bereich zur Detektion des zweiten Teils der Linienstrahlung vorgesehen sind.

4. Atomabsorptionsspektrometer nach Anspruch 2 oder 3, in welchem wenigstens eine Lichtquelle (150; 250; 350; 450, 451) eine Hohlkathodenlampe oder eine elektrodenlose Entladungslampe umfaßt.

5. Atomabsorptionsspektrometer nach Anspruch 4, in welchem dem Detektor oder den Detektoren jeweils eine Monochromatoreinrichtung (270; 370; 470) vorgeschaltet ist.

6. Atomabsorptionsspektrometer nach Anspruch 5 in Verbindung mit Anspruch 3, in welchem die Monochromatoreinrichtung (270; 370; 470) einen Eintrittsspalt (275; 375; 475) aufweist und der erste und der zweite Teil der Linienstrahlung in Längsrichtung des Eintrittsspalts voneinander getrennt auf den Eintrittsspalt abgebildet werden.

7. Atomabsorptionsspektrometer nach Anspruch 6, in welchem der zweite Teil der Linienstrahlung zwischen der Strahlteilereinrichtung und dem Eintrittsspalt über eine Lichtleiterverbindung (225; 325; 425) führbar ist.

8. Atomabsorptionsspektrometer nach einem der Ansprüche 2 bis 4, in welchem dem Detektor oder den Detektoren jeweils ein Polychromator vorgeschaltet ist.

9. Atomabsorptionsspektrometer nach einem der vorangegangenen Ansprüche, in welchem der Detektor oder die Detektoren in Form eines Halbleiterdetektors ausgebildet ist bzw. sind.

10. Atomabsorptionsspektrometer nach Anspruch 9, in welchem der Halbleiteretektor oder die Halbleiterdetektoren in Form eines Photodiodendetektors oder eines CCD-Detektors ausgebildet ist bzw. sind.

11. Atomabsorptionsspektrometer nach einem der vorangegangenen Ansprüche, in welchem die Atomisierungseinrichtung (160; 260; 360; 460) einen Atomisierungsofen aufweist.

12. Atomabsorptionsspektrometer nach einem der Ansprüche 1 bis 10, in welchem die Atomisierungseinrichtung (160; 260; 360; 460) eine Flamme oder eine Kaltdampfzelle aufweist.

13. Atomabsorptionsspektrometer nach einem der Ansprüche 1 bis 10, in welchem die Atomisierungseinrichtung (160; 260; 360; 460) einen Atomisierungsofen, und/oder eine Flamme und/oder eine Kaltdampfzelle, die wahlweise in den Meßlichtweg einbringbar sind, aufweist.

14. Atomabsorptionsspektrometer nach Anspruch 13, in welchem die Atomisierungseinrichtungen (160; 260; 360; 460) mikroprozessorgesteuert in den Meßlichtweg einbringbar ist.

15. Atomabsorptionsspektrometer nach einem der vorangegangenen Ansprüche, in welchem eine Kontinuumslichtquelle (380; 480) so vorgesehen ist, daß mittels der Strahlteilereinrichtung (340; 440) ein erster Teil der Kontinuumsstrahlung dieser Lichtquelle in den Meßlichtweg (310; 410) und ein zweiter Teil der Kontinuumsstrahlung dieser Lichtquelle in den Referenzlichtweg (320; 420) einkoppelbar ist.

16. Atomabsorptionsspektrometer nach Anspruch 11, in welchem die Kontinuumslichtquelle (380; 480) eine D2-Lampe umfaßt.

17. Atomabsorptionsspektrometer nach einem der Ansprüche 1 bis 14, in welchem eine Steuereinrichtung (190; 290; 390; 490) zur Steuerung der Intensität einer jeden Lichtquelle (150; 250; 350; 450, 451) in Abhängigkeit von der Zeit vorgesehen ist.

18. Atomabsorptionsspektrometer nach Anspruch 15 oder 16, in welchem eine Steuereinrichtung (390; 490) zur Steuerung der Intensität einer jeden Lichtquelle (350; 450, 451) und der Kontinuumslichtquelle (380; 480) in Abhängigkeit von der Zeit vorgesehen ist.

19. Atomabsorptionsspektrometer nach Anspruch 17 oder 18, in welchem die Steuereinrichtung (190; 290; 390; 490) entsprechend einem vorgegebenen Zeitablauf programmierbar ist.

20. Verfahren zur Durchführung einer Doppelstrahl-Atomabsorption, umfassend die Schritte:

Koppeln von Strahlung aus wenigstens einer jeweils Linienstrahlung wenigstens eines nachzuweisenden Elements emittierenden Lichtquelle in einen Meßlichtweg, der von jeder Lichtquelle durch eine eine zu untersuchende, das nachzuweisende Element enthaltende Probe in den atomisierten Zustand versetzende Atomisierungseinrichtung zu einer Detektionseinrichtung führt,

Koppeln von Strahlung aus jeder Lichtquelle in einen Referenzlichtweg, der von jeder Lichtquelle zu der Detektionseinrichtung führt,

Messen der Intensität der Strahlung, die den Meßlichtweg durchlaufen hat,

Messen der Intensität der Strahlung, die den Referenzlichtweg durchlaufen hat,

Ermitteln der durch die atomisierte Probe absorbierten Strahlung aus der Intensität der Strahlung, die den Meßlichtweg durchlaufen hat, und der Strahlung, die den Referenzlichtweg durchlaufen hat,
**dadurch gekennzeichnet, daß**

das Koppeln der Strahlung in den Meßlichtweg und in den Referenzlichtweg und das Messen der Intensität der Strahlung, die den Meßlichtweg durchlaufen hat, und das Messen der Intensität der Strahlung, die den Referenzlichtweg durchlaufen hat, gleichzeitig durchgeführt werden.

21. Verfahren nach Anspruch 20, weiter umfassend die Schritte:

gleichzeitiges Koppeln von Strahlung aus einer Kontinuumslichtquelle in den Meßlichtweg und in den Referenzlichtweg,

gleichzeitiges Messen der Intensität der Kontinuumsstrahlung, die den Meßlichtweg durchlaufen hat, und der Intensität der Kontinuumsstrahlung, die den Referenzlichtweg durchlaufen hat,

Ermitteln der durch die atomisierte Probe absorbierten Strahlung aus der Intensität der Kontinuumsstrahlung, die den Meßlichtweg durchlaufen hat, und der Intensität der Kontinuumsstrahlung, die den Referenzlichtweg durchlaufen hat,

Korrigieren der durch die Probe absorbierten Linienstrahlung mittels der durch die Probe absorbierten Untergrundstrahlung.

22. Verfahren nach Anspruch 21, in welchem das gleichzeitige Messen der Intensität der Linienstrahlung, die den Meßlichtweg durchlaufen hat, und der Intensität der Linienstrahlung, die den Referenzlichtweg durchlaufen hat, sowie das gleichzeitige Messen der Intensität der Kontinuumsstrahlung, die den Meßlichtweg durchlaufen hat, und der Intensität der Kontinuumsstrahlung, die den Referenzlichtweg durchlaufen hat, gemäß einem Meßzyklus (T) ablaufen, der eine Messung der Kontinuumsstrahlung (C) und eine Messung der Linienstrahlung (L) umfaßt.

23. Verfahren nach Anspruch 22, in welchem die Meßzeit für die Messung der Kontinuumsstrahlung (C) und die Meßzeit für die Messung der Linienstrahlung (L) in Abhängigkeit von dem verwendeten Atomisierungsprozeß, von der Intensität der Linienlichtquelle und der Intensität der Kontinuumslichtquelle, sowie von der Änderungsrate der Untergrundabsorption eingestellt werden.

24. Verfahren nach einem der Ansprüche 20 oder 21, in welchem die von der Atomisierungseinrichtung abgegebene Strahlung während Dunkelphasen, in denen weder Strahlung von der Linien emittierenden Lichtquelle bzw. von der Linien emittierenden Lichtquelle oder der Kontinuumsstrahlung emittierenden Lichtquelle ausgegeben wird, gemessen wird.

25. Verfahren nach Anspruch 24, in welchem das gleichzeitige Messen der Intensität der Linienstrahlung, das gleichzeitige Messen der Intensität der Kontinuumsstrahlung und das Messen der Intensität der von der Atomisierungseinrichtung abgegebenen Strahlung gemäß einem Meßzyklus (T) ablaufen, der eine erste Messung der von der Atomisierungseinrichtung abgegebenen Strahlung (D1), eine erste Messung der Kontinuumsstrahlung (C1), eine zweite Messung der von der Atomisierungseinrichtung abgegebenen Strahlung (D2), eine Messung der Linienstrahlung (L), eine dritte Messung der von der Atomisierungseinrichtung abgegebenen Strahlung (D3) und eine zweite Messung der Kontinuumsstrahlung (C2) umfaßt.

26. Verfahren nach Anspruch 25, in welchem die Meßzeit ($T_1$) die erste Messung der von der Atomisierungseinrichtung abgegebenen Strahlung (D1), die Meßzeit ($T_2$) für die erste Messung der Kontinuumsstrahlung (C1), die Meßzeit ($T_3$) für die zweite Messung der von der Atomisierungseinrichtung abgegebenen Strahlung (D2), die Meßzeit ($T_4$) für die Messung der Linienstrahlung (L), die Meßzeit ($T_5$) für die dritte Messung der von der Atomisierungseinrichtung abgegebenen Strahlung (D3) und die Meßzeit ($T_6$) für die zweite Messung der Kontinuumsstrahlung (C2) in Abhängigkeit von dem verwendeten Atomisierungsprozeß, von der Intensität der Linienlichtquelle und der Intensität der Kontinuumslichtquelle, der Intensität der durch die Atomisierungseinrichtung erzeugten Strahlung, sowie von der Änderungsrate der Untergrundabsorption eingestellt werden.

*Fig. 1*

Fig. 2

Fig. 3

Fig. 4

*Fig. 5a*

*Fig. 5b*

Fig. 6

Fig. 7

Fig. 8

Fig. 9A

Fig. 9B

Fig. 9C

Fig. 10A

Fig. 10B

Fig. 10C

Fig. 11A

Fig. 11B

Fig. 11C

Fig. 12

EP 0 902 272 A2

*Fig. 13*

*Fig. 14*